(19) Europäisches Patentamt

European Patent Office

Office européen des brevets

(11) **EP 0 949 369 B1**

(12) **EUROPEAN PATENT SPECIFICATION**

(45) Date of publication and mention
of the grant of the patent:
**06.11.2002 Bulletin 2002/45**

(51) Int Cl.⁷: **D03D 15/00**, B32B 5/26

(21) Application number: **99302336.5**

(22) Date of filing: **25.03.1999**

(54) **Fiber laminates**

Faserlaminate

Laminés à fibres

(84) Designated Contracting States:
**DE ES FR GB IT SE**

(30) Priority: **30.03.1998 GB 9806853**

(43) Date of publication of application:
**13.10.1999 Bulletin 1999/41**

(73) Proprietor: **HEXCEL CORPORATION**
**Pleasanton, CA 94588-8781 (US)**

(72) Inventors:
• **Steele, Mark**
**Huntingdon, Cambs PE18 6UT (GB)**
• **Howard, Neil**
**Cambridge CB1 3AT (GB)**

(74) Representative:
**Doble, Richard George Vivian et al**
**Langner Parry**
**52-54 High Holborn**
**London, WC1V 6RR (GB)**

(56) References cited:
**EP-A- 0 589 286**     **EP-A- 0 713 934**
**FR-A- 2 698 640**

**Description**

This invention relates to fabric reinforced thermoset and thermoplastic structures.

Honeycomb panels having non-self supporting thin skins of carbon fiber fabric laminates are known in the art. These honeycomb structures can be used in environments where damage tolerance and impact resistance are desirable. However, use of such honeycomb structures for example as engine nacelles gives rise to problems when, for example, a part of the engine nacelle is damaged and needs replacing. The damaged panel cannot easily be dismounted and replaced. Difficulties in replacing the damaged panels are mainly due to presence in the laminate structure of the honeycomb supporting member. When the damaged honeycomb structures do need replacing, the whole structure has to be returned to the factory to undergo a complex and expensive procedure.

In view of these difficulties, attempts have been made to produce thin self supporting laminates which do not include these honeycomb support members and which allow for easy on site replacement of damaged engine nacelle panels for example. Efforts to improve the impact resistance and damage tolerance of the existing thin laminate structures have mainly centred on attempts to develop specialised matrix resins for use as impregnating agents for the layers of carbon fiber which make up the carbon fiber reinforced plastic material. Changes in the matrix material were found to give rise to only relatively small improvements in damage tolerance and in impact resistance.

Most surprisingly, it has now been found that very significant and unexpected improvements in these parameters results from the use in the laminates of specific woven fabric materials.

International Patent Application WO94/12708 corresponding to Australian Patent 673872 (Brochier S.A.) describes a woven fabric in which

    a) the thread or tow is of a yarn count e.g. 12,000 that is greater than a yarn count traditionally used to achieve said fiber volume ratio for said given weight per unit area,
    b) the threads do not have a torsion greater than the original torsion of the threads before weaving,
    c) the width of the threads is, over the whole length of the threads, greater than or equal to the original width of the threads before weaving.

EP-A-0,713,934 to Toray Industries Inc also describes methods for the production of woven carbon fibre fabric sheets which can be impregnated with resin and formed into laminated structures. The fabric materials of the invention of the '934 reference are said to be cheaper because larger sized yarns can be used because of the weaving method. The woven fabrics and resin impregnated woven fabrics of the inventions of the art are said to exhibit high strengths. There is however, no disclosure that the woven fabrics and impregnated woven fabrics of the art have high impact resistance and high tolerance to damage and the presence of these properties would not be expected, since, one skilled in the art, does not understand impact strength and damage resistance to be functions of fibre strength.

In one embodiment, this invention provides a self supporting thin laminate comprising from 2-10 layers of a composite member where each composite member comprises a woven fiber fabric woven from a plurality of yarns, each yarn having at least one of

    a) a tow count of at least 12000 or
    b) an average elongation at break greater than 1.9%, an average tensile strength greater than 4000MPa and an average tensile modulus greater than 200GPa,

each composite further comprising a cured matrix wherein said self supporting thin laminate has a damage area of less than 200mm$^2$ for a 7 joule per mm impact event and an indent resistance of less than 0.4mm for a 7 joule per mm impact event.

Preferably the average elongation at break is greater than 2%, the average tensile strength is greater than 4500MPa, and the cured matrix is a cured thermoset matrix.

Again preferably the damage area and indent resistance numbers of 200mm$^2$ and 0.4mm are shown for an 8 Joule per mm impact event.

In a second embodiment there is provided the use of the above thin self supporting laminates in a structure where the properties of high impact resistance and high tolerance to damage are important.

DETAILED DESCRIPTION

The thin laminated structures of the present invention have from 2 to 10 layers, preferably from 2 to 6 layers and, more preferably, 3 - 4 layers. In terms of actual thickness, the laminates of the invention are preferably from 0.3 to 4mm thick and more preferably about 1-2mm thick. The surprisingly improved impact resistance and damage tolerance properties are not shown in laminates having thickness of much above 5mm. Having said this, it is clear improvements in impact resistance and damage tolerance can be shown in single layer composites and the invention is therefore not limited to composites having a plurality of layers.

The laminates of the invention preferably comprise a plurality of woven carbon fiber fabric layers. However, other fibres can be used alone or in combination with carbon for example glass, high density polyethylene, aramid, silicon carbide or ceramic.

Each woven fabric layer comprises a plurality of woven fiber yarns. The yarns that are useful in the laminates of the invention are classed as high strength fibre yarns. They also must exhibit at least one and preferably both of a specific tow filament count in the tow used for weaving a fabric and the specific tensile break strength, tensile modulus and tensile break elongations set out below. By tow count is meant the number of filaments or fibers included in each yarn. The above-mentioned tow count parameter for the yarns of the laminates of this invention is a tow count of at least 12000. The specific tensile break strength, tensile modulus and tensile break elongation parameters mentioned above are an average elongation at break of at least 1.9%, an average tensile strength greater than 4,000 MPa and an average tensile modulus of greater than 200 GPa.

Preferably the average elongation at break is at least 2% and the average tensile strength is at least 4,500 MPa.

Suitable fabrics exhibiting the above parameters can be made by the methods disclosed in the above-mentioned International Application WO94/12708.

Particularly preferred for use in making woven fabrics for use in the laminates of this invention is a carbon fiber yarn distributed under the trade name TORAYCA T700SC-12K made by Toray Industries Inc., and having a yarn size of 7,200 deniers and exhibiting the tensile break strength, tensile modulus and tensile break elongation parameters falling within the parameters set out above.

As mentioned above, the laminates of the subject invention are self supporting laminates in contrast to the non-self supporting skins which are supported by honeycombs. The laminates of the invention can be either shaped or unshaped, but are preferably shaped. This invention is not particularly limited by the weave pattern. Indeed woven fabrics can be made in accordance with the processes described in the above mentioned International Application WO94/12708 in a number of weave styles selected from a plain weave style, a crowfoot satin weave style, a 2x2 basket weave style, a 5HS weave style, an 8HS weave style, a leno weave style, a 2/2 twill weave style, a 2/1 twill weave style, a non-crimp weave style, a + or- 45° plain weave style, a + or - 45° 8HS weave style, and a + or - 45° crowfoot satin weave style.

Thermosetting or thermoplastic resins can be used as impregnating matrix materials. However, thermosetting resins are preferred. Preferably the thermosetting matrix material is selected from epoxy, bismaleimide, phenolic and cyanate ester resins including combinations of the above. The formulated thermoset matrix can contain up to 80% by weight, but preferably up to 50% by weight additives not covered by the above. These additives will typically fall into a number of categories, such as, thermoplastics, curing agents, flame-retardants and fillers. More preferably the resin is an epoxy which is curable at temperatures in the range 50-200°C preferably 130-180°C.

Especially preferred epoxies for use in the laminates of the invention are tetra-functional glycidylamines which can be cured with diaminodiphenylsulfone. In order to avoid the occurrence of microcracks in the carbon fiber reinforced plastic laminates of the invention when they are pulled in the direction crossing the tensile stress at right angles ie, in the direction of the weft. It is desirable that the tensile break elongation of the matrix resin is 2.5-15% when it is measured according to ASTMD638.

Most particularly, each composite member comprises from 27-67% by weight matrix and from 73-33% by weight woven carbon fiber fabric.

The laminates of the invention can be made by conventional pre-preg layup techniques as well as other techniques such as resin film infusion, resin transfer moulding and liquid resin infusion all of which will be well known to those skilled in the art. The laminates can be simultaneously cured and shaped under the influences of temperature and pressure. The preferred temperatures are set out above. Preferably either the shaping or the curing or both can be carried out at pressures in the range of atmospheric to 10 bar in either an autoclave or via a vacuum bag curing technique.

The laminates of this invention have damage tolerance of less than 200mm$^2$ for a 7 joule impact when the damage area is measured in accordance with the "damage area protocol" set out below.

Laminates of this invention have indent resistance of less than 0.4mm for a 7 joule impact when the indent resistance is measured in accordance with the indent resistance protocol set out below.

In view of these surprisingly and unexpectedly high indent and damage resistance numbers, the laminates of the invention are useful in environments where there is likely to be exposure to impact events and where high levels of protection are required against these impact events. As mentioned, this invention extends to the use of the above-mentioned laminates, for example, in structural and non structural, mechanical and electrical members of aircraft and in high pressure aircraft shells for protection from high impact energies, which might arise for example during on and off wing maintenance taxiing and landing as well as during failure of a jet turbine.

Other environments where the laminates of this invention can be used with an advantage are for providing highly indent resistant and high damage resistant body panels for use in automobiles.

There are no universally accepted experimental protocols for measuring indent resistance and damage resistance properties of thin materials, and accordingly, these properties are measured in accordance with the following experimental protocol, as mentioned above.

The Damage Resistance Protocol and Indent Resistance Protocol

Specimens for impact are placed between two stainless steel rings. The centre of these two rings has been removed. This allows a 100mm diameter unsupported specimen to be impacted via the described 1 kg indentor.

The two rings, separated by the test specimen are placed on a solid platform which is usually marble. A load of 35kg is distributed evenly over the upper ring, which acts as a type of clamp, thus keeping the rings secure and in position. The load on the rings is applied in such a way that the indentor may still strike the specimen without interference.

A capture device is fitted above the support rings and specimen. This capture device is used to catch the falling indentor once the indentor has struck the test specimen, preventing multiple impact events.

The indentor is dropped down a steel tube which has been designed to limit friction. The indentor is held at the desired height via an electromagnet, which may be disconnected at the appropriate time, hence, releasing the impactor which then initiates the impact event.

The height at which the indentor is dropped determines the impact energy. This is calculated using the following equation.

$$\text{Energy (J)} = \text{Weight (g)} \times \text{Height (m)} \times \text{Acceleration due to gravity (ms}^{-2})$$

Once the impact event has taken place, the damaged specimen is removed and assessed.

Firstly, the indentation is measured by a needle dial gauge (measurement in mm). This gives rise to the indent resistance value.

Secondly, the damage area is measured via an ultrasound technique (measurement in $mm^2$). This technique is commonly called C Scan. It is widely used throughout the composites industry to detect damage and assess quality. This measurement gives rise to the damage resistance value.

Also in this specification, tensile break strength, tensile modulus and tensile break elongation are measured in accordance with DIN 29965.

Examples and Comparative Examples

In the following examples and comparative examples, a number of different fabrics, as listed in table 1, were used. Also shown in table 1 is the particular yarn from which each fabric was woven and the weaving style.

Table 1

| FABRIC | YARN | STYLE |
|--------|----------|-----------|
| G803 | T300 3K | 5 H SATIN |
| G1083 | T300J 6K | 2X2 TWILL |
| G986 | HTA 6K | 2X2 TWILL |
| G1094 | T800 6K | 5 H SATIN |
| E3794 | T700 12K | 2X2 TWILL |

Fabric G803 comprises yarns with a tow count of 3,000. The particular yarn T300 is a carbon fiber yarn made by Toray Industries Inc., with yarn size 1,800 denier and with tensile strength averaging 3,530 MPa, with tensile modulus averaging 230GPa and with elongation at break averaging 1.5%. Yarns with these parameters are commercially available for a number of manufacturers including Toray Industries Inc. Fabric G1083 is a fabric woven from a 6000 tow count yarn, the yarns having the similar parameters as the yarn used in the G803 fabric.

Fabric G986 is woven from a different 6000 tow count yarn, again having parameters similar to the yarn used in fabric G803.

Fabric G1094 is a fabric woven from a high performance yarn having a tow count of 6000 and the following parameters:-

| Tensile strength averaging | 5,490 MPa |
|---|---|
| Tensile modulus averaging | 294 GPa |
| Elongation at break averaging | 1.9% |

Fabrics G803, G1083, G986 and G1094 are not fabrics which can be used in the laminates of the subject invention.

Fabric E3794 can be used in the laminates of the subject invention. Fabric E3794 is a fabric which is woven from a 12000 tow count yarn, each yarn having an average elongation at break greater than 1.9%, an average tensile strength greater than 4000MPa and an average tensile modulus greater than 200 GPa. E3794 refers to a specific fibre type, tow count, weave style and fabric weight. Both weave style and fabric weight may vary within this invention, hence so will the fabric designation.

Example 1

Laminates comprising the fabrics set out in table 1 were tested for damage resistance in accordance with the damage resistance protocol set out above, and the laminates of this invention had far less damage area than the other tested fabrics.

Example 2

Laminates comprising the fabrics set out in table 1 above were tested for indent resistance in accordance with the impact resistance protocol set out above.

The laminate of this invention (E3794) had far lower indents than did the other laminates tested.

Reference Example 3

For comparison, indent resistance testing was conducted in accordance with the indent resistance protocol set out above, on laminates comprising the G803 fabric, as described in table 1 above, but with different matrix materials. The matrix materials used were DS16, DS17, DS20, DS21 and M21.

Reference Example 4

Damage resistance testing was carried out in accordance with the damage resistance protocol set out above with the same laminates as the laminates described in Reference Example 3.

In Reference Examples 3 and 4, no particular improvement in damage resistance and indent resistance was obtained when the matrix material was changed. This is in direct contrast to the relatively significant improvement obtained when the fabric described in this invention is used in the laminates.

**Claims**

1. A self supporting thin laminate comprising from 2-10 layers of a composite member where each composite member comprises a woven fiber fabric woven from a plurality of yarns, each yarn having at least one of

   a) a tow count of at least 12000 or
   b) an average elongation at break greater than 1.9%, an average tensile strength greater than 4000MPa and an average tensile modulus greater than 200GPa,

   each composite further comprising a cured matrix wherein said self supporting thin laminate has a damage area of less than 200mm$^2$ for a 7 joule per mm impact event and an indent resistance of less than 0.4mm for a 7 joule per mm impact event.

2. The laminate of claim 1 comprising both

   a) a tow count of at least 12000 and
   b) an average elongation at break greater than 1.9%, an average tensile strength greater than 4000MPa and an average tensile modulus greater than 200GPa.

3. The laminate of claim 1 or claim 2 wherein the average elongation at break is greater than 2%, and the average tensile strength is greater than 4500MPa.

4. The laminate of any preceding claim wherein the cured matrix is a cured thermoset matrix.

5. The laminate of any preceding claim wherein the laminate has a damage area of less than 200mm$^2$ for an 8 joule per mm impact event and an indent resistance of less than 0.4mm for an 8 joule per mm impact event.

6. A laminate according to any preceding claim in which a major proportion of the filaments of the fabric are carbon.

7. The laminate of any preceding claim comprising from 2 to 6 layers of the composite member.

8. The laminate of any preceding claim comprising 3 to 4 layers of the composite member.

9. The laminate of preceding claims 4-8 where the thermoset matrix is selected from epoxy, bismaleimide, phenolic or cyanate ester matrices or mixtures thereof.

10. The laminate of any preceding claim wherein the matrix comprises 50% by weight or less of the thermoset matrix materials the balance comprising additives selected from thermoplastics, curing agents, flame retardants and fillers.

11. The laminate of claim 10 wherein the matrix comprises 20% by weight or less of the matrix materials.

12. The laminate of any preceding claim wherein the thermoset matrix is an epoxy.

13. The laminate of any preceding claim wherein each composite member comprises from 27-67% by weight matrix and from 73-33% by weight woven carbon fiber fabric.

14. Use of the laminates of any preceding claim in environments where the parameters of high resistance to damage and high indent resistance are required for protection.


**Patentansprüche**

1. Selbstragendes, dünnes Laminat, aufweisend 2 bis 10 Lagen eines Verbundstoffelementes, wobei jedes Verbundstoffelement ein aus einer Vielzahl von Garnen gewebtes Fasergeflecht aufweist, von denen jedes Garn mindestens

    a) eine Spinnkabel-Zahl von mindestens 12.000 hat oder

    b) eine mittlere Reißdehnung größer als 1,9%, eine mittlere Reißfestigkeit größer als 4.000MPa und einen mittleren Zug-E-Modul größer als 200 GPa hat;

    wobei jeder Verbundstoff ferner eine gehärtete Matrix aufweist, in der das selbsttragende, dünne Laminat eine Schädigungsfläche von weniger als 200mm$^2$ bei einem Schlagereignis von 7 Joul pro Millimeter hat sowie eine Kerbschlagfestigkeit von weniger als 0,4mm bei einem Schlagereignis von 7 Joul pro Millimeter.

2. Laminat nach Anspruch 1, aufweisend sowohl

    a) eine Spinnkabel-Zahl von mindestens 12.000 als auch

    b) eine mittlere Reißdehnung größer als 1,9%, eine mittlere Reißfestigkeit größer als 4.000MPa und einen mittleren Zug-E-Modul größer als 200 GPa.

3. Laminat nach Anspruch 1 oder 2, bei welchem die mittlere Reißdehnung größer ist als 2% und die mittlere Reißfestigkeit größer ist als 4.500MPa.

**4.** Laminat nach einem der vorgenannten Ansprüche, bei welchem die gehärtete Matrix eine gehärtete duroplastische Matrix ist.

**5.** Laminat nach einem der vorgenannten Ansprüche, wobei das Laminat eine Schädigungsfläche von weniger als 200mm$^2$ bei einem Schlagereignis von 8 Joul pro Millimeter hat sowie eine Kerbschlagfestigkeit von weniger als 0,4mm bei einem Schlagereignis von Joul pro Millimeter.

**6.** Laminat nach einem der vorgenannten Ansprüche, bei welchem der Hauptanteil der Filamente des textilen Flächengebildes Carbon ist.

**7.** Laminat nach einem der vorgenannten Ansprüche, aufweisend 2 bis 6 Lagen des Verbundstoffelementes.

**8.** Laminat nach einem der vorgenannten Ansprüche, aufweisend 3 bis 9 Lagen des Verbundstoffelementes.

**9.** Laminat nach einem der vorgenannten Ansprüche 4 bis 8, bei welchem die duroplastische Matrix ausgewählt ist aus Epoxy-, Bismaleinimid-, Phenolharz- oder Cyanatester-Matricen oder Mischungen davon.

**10.** Laminat nach einem der vorgenannten Ansprüche, bei welchem die Matrix 50 Gewichtsprozent oder weniger der duroplastischen Matrixmaterialien aufweist und den Rest Additive ausmachen, ausgewählt aus thermoplastisches Kunststoffen, Härtungsmitteln, Flammhemmstoffen und Füllstoffen.

**11.** Laminat nach Anspruch 10, bei welchem die Matrix 20 Gewichtsprozent oder weniger Matrixmaterialien aufweist.

**12.** Laminat nach einem der vorgenannten Ansprüche, bei welchem die duroplastische Matrix eine Epoxy-Matrix ist.

**13.** Laminat nach einem der vorgenannten Ansprüche, bei welchem jedes Verbundstoffelement 27% bis 67 Gewichtsprozent Matrix und 73% bis 33 Gewichtsprozent gewebtes Carbonfasergeflecht aufweist.

**14.** Verwendung der Laminate nach einem der vorgenannten Ansprüche in Umgebungen, in denen zum Schutz die Parameter der hoher Widerstand gegen Schädigung und hohe Kerbschlagfestigkeit gefordert sind.


**Revendications**

**1.** Laminé mince autoportant comprenant de 2 à 10 couches d'un élément composite dans lequel chaque élément composite comprend un tissu en fibres tissé à partir d'une pluralité de fils, chaque fil ayant l'une au moins des caractéristiques suivantes :

a) un décompte de fibres égal à au moins 12.000, ou
b) un allongement moyen à la rupture supérieur à 1,9 %, une résistance moyenne à la traction supérieure à 4000 MPa, et un module moyen en traction supérieur à 200 GPa,

chaque composite comprenant en outre une matrice durcie, de sorte que ledit laminé mince autoportant présente une zone endommagée inférieure à 200 mm$^2$ pour un événement d'impact de 7 Joules par mm, et une résistance à l'entaillement inférieure à 0,4 mm pour un événement d'impact de 7 Joules par mm.

**2.** Laminé selon la revendication 1, comprenant à la fois :

a) un décompte de fibres égal à au moins 12.000, et
b) un allongement moyen à la rupture supérieur à 1,9 %, une résistance moyenne à la traction supérieure à 4000 MPa, et un module moyen en traction supérieur à 200 GPa.

**3.** Laminé selon l'une ou l'autre des revendications 1 et 2, dans lequel l'allongement moyen à la rupture est supérieur à 2 %, et la résistance moyenne à la traction est supérieure à 4500 MPa.

**4.** Laminé selon l'une quelconque des revendications précédentes, dans lequel la matrice durcie est une matrice thermodurcissable.

**5.** Laminé selon l'une quelconque des revendications précédentes, dans lequel le laminé présente une zone endommagée inférieure à 200 mm$^2$ pour un événement d'impact de 8 Joules par mm et une résistance à l'entaillement inférieure à 0,4 mm pour un événement d'impact de 8 Joules par mm.

**6.** Laminé selon l'une quelconque des revendications précédentes, dans lequel une proportion majeure des filaments du tissu sont en carbone.

**7.** Laminé selon l'une quelconque des revendications précédentes, comprenant de 2 à 6 couches de l'élément composite.

**8.** Laminé selon l'une quelconque des revendications précédentes, comprenant de 3 à 4 couches de l'élément composite.

**9.** Laminé selon les revendications précédentes 4 à 8, dans lequel la matrice thermodurcissable est choisie parmi des matrices en époxy, des matrices en bismaléimide, des matrices phénoliques, des matrices d'ester cyanate, ou leurs mélanges.

**10.** Laminé selon l'une quelconque des revendications précédentes, dans lequel la matrice comprend 50 % en poids ou moins des matériaux de matrice thermodurcissables, le reste comprenant des additifs choisis parmi les matières thermoplastiques, les agents de durcissement, les retardateurs de flamme et les produits de remplissage.

**11.** Laminé selon la revendication 10, dans lequel la matrice comprend 20 % en poids ou moins des matériaux de la matrice.

**12.** Laminé selon l'une quelconque des revendications précédentes, dans lequel la matrice thermodurcissable est un époxy.

**13.** Laminé selon l'une quelconque des revendications précédentes, dans lequel chaque élément composite comprend de 27 à 67 % en poids de matrice et de 73 à 33 % en poids d'un tissu tissé en fibres de carbone.

**14.** Utilisation des laminés selon l'une quelconque des revendications précédentes dans des environnements dans lesquels les paramètres de forte résistance vis-à-vis des endommagements et de forte résistance à l'entaillement sont exigés pour la protection.